# EUROPEAN PATENT APPLICATION

(11) **EP 4 664 086 A1**
(43) Date of publication of application: **17.12.2025**
(21) Application number: 25179460.8
(22) Date of filing: 28.05.2025
(51) Int. Cl.: G01M 3/04, G01M 3/22

(54) **METHODS AND SYSTEMS FOR A LEAK DETECTION TEST**

(30) Priority: 31.05.2024 DK PA202400467
(71) Applicant: Agramkow Fluid Systems A/S, 6400 Sønderborg (DK)
(72) Inventor: THYSSEN, Leif, 6400 Sønderborg (DK); KRUUSE PEDERSEN, Thomas, 6400 Sønderborg (DK); WESTERGAARD ANDREASEN, Lars, 6400 Sønderborg (DK)
(74) Representative: Zacco Denmark A/S

(57) **Abstract**

Systems, computer-implemented methods and related aspects for leak detection testing are disclosed. The system for a leak detection test comprises a leak detector unit comprising a sniffer probe and is configured for leak testing a test object by sniffing a testing point of the test object. The system further comprises a sensor unit configured to monitor a set of parameters of the leak detection test in real time. The system further comprises a scanner for scanning the test object. The system further comprises a processor unit configured to receive object identification data of the test object by scanning the test object thereby identifying the test object, receive a first set of leak test data for the identified test object, the first set of leak test data comprising information about a target set of process parameters for the leak detection test of the testing point, receive a second set of leak test data by the sensor unit of the leak detector system, the second set of leak test data representing a set of monitoring parameters obtained by the sensor unit in real time during the leak detection test of the testing point, and output a signal indicative of a status of the leak detection test based on a difference level between the first set of leak test data and the second set of leak test data.

## Description

### TECHNICAL FIELD

The disclosed technology relates to methods, systems and other related aspects for a leak detection test.

### BACKGROUND

Leak testing is applied in a broad range of industries as part of the quality control process for testing products or systems that seal to hold a fluid in or hold a fluid out.

Leak testing is important in multiple aspects including daily safety, environmental protection, reliability of production processes and products.

Leak testing can be performed as quantitative or qualitative test methods and applied in industries such as the automotive, refrigeration and air conditioning, for testing medical devices, pharmaceutical packaging, consumer electronics amongst others.

Leak detection can be useful to incorporate in production lines, for quality control, maintenance and for reworking or repairing products and systems.

Leak testing of products comprising a refrigerant can be achieved using various leak detection methods. The choice of the detection method depends on which method is most appropriate for the system at hand. This may include the size of the system, the type of material contained in the system, the rigidity of the system, the accessibility and the operating temperature of the system.

Leak detectors for detection of signal gasses leaking from devices are widely known, e.g. devices forming a chamber with the surface of the device to be tested are commonly known. Common signal gases include helium, tracer gas and refrigerants.

Leak testing as it stands today faces numerous challenges that compromise its efficacy. Current methods of leak detection are often random, unreliable, and inconsistent. Leak testing is frequently conducted without a systematic approach, resulting in inconsistent detection efforts, reducing the chances of identifying leaks accurately. Moreover, inconsistency in testing can lead to missed detections. As a result, some products may not be adequately checked for refrigerant leaks, or may not be checked at all. Even if products are tested, certain leaks might remain undetected.

Accordingly, there is still a need in the art for methods, systems and related products capable of improving the current state of leak detection technologies.

### SUMMARY

The herein disclosed technology seeks to mitigate, alleviate or eliminate one or more of the above-identified deficiencies and disadvantages in the prior art to address various problems relating to ensuring reliable operation of leak detection systems and methods.

It is therefore an object of the present disclosure to provide a computer-implemented method, a computer-readable storage medium, a computer program product and a system that alleviate all or at least some of the drawbacks of presently known systems and methods.

Further, it is an object of the present disclosure to provide a computer-implemented method, a computer-readable storage medium, a computer program product and a system that provide a technology for ensuring improved reliability and accuracy of the leak detection.

Yet another objective is to achieve improvements in ease of use and efficiency in leak detection for systems and method for leak detection.

Various aspects and embodiments of the disclosed invention are defined below and in the accompanying independent and dependent claims.

A first aspect of the disclosed technology comprises a system for a leak detection test. The system comprises:
- a leak detector unit, comprising a sniffer probe, configured for leak testing a test object by sniffing a testing point of the test object;
- a sensor unit configured to monitor a set of parameters of the leak detection test in real time;
- a scanner for scanning the test object;
- a processor unit configured to
   receive object identification data of the test object by scanning the test object thereby identifying the test object,
   receive a first set of leak test data for the identified test object, the first set of leak test data comprising information about a target set of process parameters for the leak detection test of the testing point,
   receive a second set of leak test data by the sensor unit of the leak detector system, the second set of leak test data representing a set of monitoring parameters obtained by the sensor unit in real time during the leak detection test of the testing point, and
   output a signal indicative of a status of the leak detection test based on a difference level between the first set of leak test data and the second set of leak test data.

In a preferred first aspect of the disclosed technology comprises a system for a leak detection test. The system comprises:
- a leak detector unit, comprising a sniffer probe, configured for leak testing a test object by sniffing a testing point of the test object;
- a sensor unit configured to monitor a set of parameters of the leak detection test in real time;
- a scanner for scanning the test object;
- a processor unit configured to
   receive object identification data of the test object by scanning the test object thereby identifying the test object,
   receive a first set of leak test data for the identified test object, the first set of leak test data comprising information about a target set of process parameters for the leak detection test of the testing point,
   receive a second set of leak test data by the sensor unit of the leak detector system, the second set of leak test data representing a set of monitoring parameters obtained by the sensor unit in real time during the leak detection test of the testing point, and
   output a signal indicative of a status of the leak detection test based on a difference level between the first set of leak test data and the second set of leak test data, wherein the sensor unit comprises a timer configured to monitor a sniffing time value of the sniffer probe on the testing point, and
   wherein the sniffer probe comprises a contact body configured for providing a physical contact between the testing point and for activating a timer configured to monitor a sniffing time value of the sniffer probe on the testing point and a sniffing action of the sniffer probe in response to said physical contact.

Specifically, the first set of data comprises information about a plurality of target process parameters, wherein the second set of data comprises information about a plurality of measured process parameters. The difference level between the first set of leak test data and the second set of leak test data may be an indication of the status of the leak detection test. The difference level may be below or above a predefined threshold value. In some examples, when the difference level is below a threshold value, the system is configured to indicate a confirmed status of the leak detection test of the testing point and when the difference level is above a threshold value, the system is configured to indicate a faulty status of the leak detection test of the testing point.

The first set of leak test data may comprise information about a positioning of the testing point. The first set of leak test data may further comprise information about a target sniffing time value of the sniffer probe on the testing point. The first set of leak test data may further comprise information about a threshold leak rate and/or a target gas type for leak detection test. The first set of leak test data may further comprise information about a speed of the sniffer probe. The speed profile or a velocity curve of the sniffer probe may be predefined in the first set of leak test data.

The first set of leak test data may comprise information about a threshold value and/or a threshold range of one or more process parameters. The system may be configured to output the confirmation status of the testing point when the second set of leak test data, for the respective process parameter, is below the threshold value and/or within the threshold range.

Accordingly, there is provided a solution for leak testing systems with an improved functionality, in particular providing verification of testing conditions for a testing point and a tested object. A further advantage is to provide a flexible and mobile system for leak testing various products and testing points in a simple and efficient manner. The system can be used for a variety of test objects of various sizes requiring a variable leak testing condition. In particular, it was realized that there is a potential risk that the target process parameters may vary for a plurality of testing points of the test object and/or for multiple test objects. Differences in target process parameters may result in complications in leak testing.

Thus, some embodiments herein incorporate a number of testing points of the identified test object as a part of the first set of data. The processor unit may be configured to output the signal indicative of the status of the leak detection test for each one of the testing points of the identified test object. Thereby, the target set of process parameters may be obtained for each of the testing points.

A second aspect of the disclosed technology comprises a computer implemented method for controlling a leak detection test of a testing point of a test object by using a system for a leak detection test comprising a sniffer probe configured for sniffing on the testing point. The method comprises:
- receiving object identification data of the test object by scanning the test object thereby identifying the test object;
- receiving and/or generating a first set of leak test data for the identified test object, the first set of leak test data representing a set of target process parameters for the leak detection test of the testing point;
- receiving a second set of leak test data by a sensor unit of the leak detector system, the second set of leak test data representing a set of monitored parameters obtained by the sensor unit in real time during the leak detection test of the testing point;
- outputting a signal indicative of a status of the leak detection test based on a difference level between the first set of leak test data and the second set of leak test data, such that outputting the signal comprises:
   outputting a confirmation indicator when the second set of leak test data corresponds to the first set of leak test data, such as when the difference level is below a threshold value, indicating a confirmed status of the leak detection test of the testing point, or
   outputting a warning indicator when the second set of leak test data deviates from the first set of leak test data, such as when the difference level is above the threshold value, indicating a faulty status of the leak detection test of the testing point.

In a preferred second aspect of the disclosed technology comprises a computer implemented method for controlling a leak detection test of a testing point of a test object by using a system for a leak detection test comprising a sniffer probe configured for sniffing on the testing point. The method comprises:
- receiving object identification data of the test object by scanning the test object thereby identifying the test object;
- receiving and/or generating a first set of leak test data for the identified test object, the first set of leak test data representing a set of target process parameters for the leak detection test of the testing point;
- receiving a second set of leak test data by a sensor unit of the leak detector system, the second set of leak test data representing a set of monitored parameters obtained by the sensor unit in real time during the leak detection test of the testing point;
- outputting a signal indicative of a status of the leak detection test based on a difference level between the first set of leak test data and the second set of leak test data, such that outputting the signal comprises:
   outputting a confirmation indicator when the second set of leak test data corresponds to the first set of leak test data, such as when the difference level is below a threshold value, indicating a confirmed status of the leak detection test of the testing point, or
   outputting a warning indicator when the second set of leak test data deviates from the first set of leak test data, such as when the difference level is above the threshold value, indicating a faulty status of the leak detection test of the testing point,
   wherein the first set of leak test data comprises information about a target sniffing time value of the sniffer probe on the testing point and the method comprises measuring a sniffing time value of the sniffer probe on the testing point and outputting the confirmation indicator when the measured sniffing time value corresponds to the target sniffing time value, and/or.

With this aspect of the disclosed technology, similar advantages and preferred features are present as in the previously discussed aspect.

With this aspect of the disclosed technology, similar advantages and preferred features are present as in the previously discussed aspect.

A third aspect of the disclosed technology comprises a computer program product comprising instructions which, when the program is executed by a computing device of a system for a leak detection test, causes the system to carry out the method according to any one of the embodiments disclosed herein. With this aspect of the disclosed technology, similar advantages and preferred features are present as in the previously discussed aspects.

A fourth aspect of the disclosed technology comprises a (non-transitory) computer-readable storage medium comprising instructions which, when executed by a computing device of a system for leak detection test, causes the computing device to carry out the method according to any one of the embodiments disclosed herein. With this aspect of the disclosed technology, similar advantages and preferred features are present as in the previously discussed aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

An advantage of some embodiments is the risk of erroneous testing for a possible leak being reduced, thereby improving the operational safety of products comprising a refrigerant.

An advantage of some embodiments is that in an environment where multiple test products comprising a refrigerant require testing, the risk of applying erroneous testing conditions for the test object and for a testing point is reduced.

An advantage of some embodiments is that the reliability of test conditions is improved. The disclosed systems and methods are more reliable and robust, thereby improving the efficiency of leak testing.

An advantage of some embodiments is that the risk of missing a testing point is reduced. All predefined testing points of a test object may be tested for a possible leak and the status of each testing point may be checked and tracked.

These and other features and advantages of the disclosed technology will in the following be further clarified with reference to the embodiments described hereinafter.

### DESCRIPTION OF THE DISCLOSURE

As used herein, the test object may be a heat pump, a cooler, a freezer, a tumble-drier, an air conditioner, or a product comprising a cooling system.

As used herein, the testing point for leak testing may for example be a pipe section of a pipeline. Pipelines are especially subject to leak detection and even a minor leak may be of particular importance for pipelines, which require fluids under pressure or a special composition of fluids to operate in an optimal manner.

As used herein, the sniffing probe may be a sniffer configured to detect the presence of a tracer gas and pinpoint an area that is leaking. The sniffer probe may be held and/or moved along potential leak points, such as joints, connections, seals, and other areas where leaks are likely to occur.

As used herein, leak detection test refers to testing for a potential leak of a refrigerant of the test object. During testing, when the sniffer probe senses a target gas, the sniffer probe may emit an audible signal, a visual indicator, or both.

The system is configured such that by scanning of the test object, the test object is identified. Based on the identified object, the first set of leak test data, e.g. target process parameters for leak testing, may be obtained or generated. This provides flexibility in the leak testing when testing multiple types of test objects.

In some embodiments, the test object comprises a radio frequency tag and said scanner comprises a radio frequency tag reader.

In some embodiments, the scanner is a camera configured to capture an image of the test object comprising geometrical data and the system is configured to identify the test object based on the geometrical data.

In some embodiments, the sensor unit comprises a gas sensor, such as mass spectrometer, configured to monitor a gas leak rate.

The sensor unit comprises a gas sensor, such as an infrared gas sensor, configured to monitor a gas type. The gas sensor may be a mass spectrometer.

In some embodiments, the sensor unit comprises a positioning sensor configured to monitor positioning of the sniffer probe and/or the testing point. The positioning sensor may comprise one or more cameras. The camera may be configured to track positioning of the testing point and the sniffer probe. Other sensors such as sound wave sensors, radar and thermic technologies, which can be configured to measure a distance may be the positioning sensor. An inertial measurement unit (IMU) allowing the processor unit to track the sniffer probe's position may be the positioning sensor.

In some embodiments, the sensor unit comprises a velocity sensor configured to monitor the velocity of the sniffer probe. The velocity sensor may be an accelerometer.

The sensor unit comprises a timer configured to monitor a sniffing time value of the sniffer probe on the testing point. The processing unit may be configured to monitor the time. The timer may be activated based on an output confirmation indicator, indicating that the sniffer probe's coordinates are within a range defined by the testing point's coordinates. The timer may be activated when the sniffer probe forms a chamber around the testing point. The target sniffing time may be between one to six seconds. The target sniffing time may be same or different for the plurality of the testing points of the same test object.

In some embodiments, the system is configured to measure a velocity of the sniffer probe and/or a leak rate and/or a gas type and/or a sniffing time of the sniffer probe when the chamber is formed.

In some embodiments, the leak detection system is configured to determine the difference level between the first set of leak test data and the second set of leak test data. The system may be further configured to output a confirmation indicator when the second set of leak test data corresponds to the first set of leak test data. For example, when it is determined that the difference level is below a threshold value, the system may be configured for indicating a confirmed status of the leak detection test of the testing point. The confirmation indicator may be an indicator signalling that testing has been carried out under the pre-defined conditions as described by the first set of leak test data.

The system may be further configured to output a warning indicator when the second set of leak test data deviates from the first set of leak test data. For example, when it is determined that the difference level is above a threshold value, the system is configured to indicate a faulty status of the leak detection test of the testing point. The warning indicator may be an indicator signalling that testing has been carried out outside of the pre-defined conditions described by the first set of leak test data.

The first set of data may comprise a plurality of threshold values or pre-conditions. Thus, the difference level between the first set of leak test data and the second set of leak test data may refer to a difference of the second leak test data from the threshold value or the pre-condition state defined by the first set of leak test data. Moreover, the first set of leak test data may comprise a range for a process parameter. Thus, the warning indicator may be an indicator signalling that the second set of leak test data for the respective process parameter falls outside of the range defined by the first set of leak test data.

In some embodiments, the first set of leak test data comprises information about a number of testing points of the identified test object and the processor unit is configured to output the signal indicative of the status of the leak detection test for each one of the testing points of the identified test object. This implies that the system may be configured to receive a first set of leak test data comprising information about a target set of process parameters of each of the testing points of the test object. Advantageously, reliability and flexibility in leak testing is improved, when testing multiple types of test objects having multiple testing points. Specifically, the same test objects having multiple testing points may require variable leak testing target conditions.

In some embodiments, the first set of leak test data comprises information about a positioning of the testing point and the second set of leak test data comprises information about a monitored positioning of the sniffer probe and the processor unit is configured to output a confirmation indicator when the difference level between the monitored positioning of the sniffer probe and the positioning of the testing point is within a predefined positioning threshold range. In some embodiments, the processor unit is configured to output a confirmation indicator when the monitored positioning of the sniffer probe is within a distance value of 0 to 250 mm from the target positioning of the testing point indicated by the first set of leak test data. The distance value and/or the range may be adapted to the needs of the user and/or the test object and/or the leak detection testing line.

In some embodiments, the first set of leak test data comprises information about a target sniffing time value of the sniffer probe on the testing point and the second set of leak test data comprises information about a measured sniffing time value of the sniffer probe on the testing point and the processor unit is configured to output a confirmation indicator when the measured sniffing time value corresponds to the target sniffing time. In some embodiments, a sniffing action is activated upon receiving the confirmation indicator of the monitored positioning of the sniffer probe. This implies that, in some embodiments, measuring of the sniffing time is triggered based on outputting the confirmation indicator of the positioning of the sniffer probe.

In some embodiments, the sensor unit comprises a timer for monitoring sniffing time and a position sensor for monitoring positioning of the sniffer probe. The timer may be configured for signalling a confirmation indicator when a predefined sniffing time has lapsed for leak detection testing of a given testing point for a possible gas-leak. Moreover, the system may be configured for signalling a positioning confirmation indicator when the sniffer probe is within a predefined distance from the given testing point. The system is configured such that upon signalling of the position tracker, the timer and a sniffing action is activated. Alternatively, sniffing time may be a predefined time interval for the sniffer probe to enclose the testing point, e.g. when the sniffer probe is in the closed configuration.

In some embodiments, the first set of leak test data comprises information about a threshold leak rate and the second set of leak test data comprises information about a measured leak rate by a first gas sensor of the sensor unit. Thus, the system is configured to output the warning indicator upon measuring a leak rate above the threshold leak rate.

In some embodiments, the first set of leak test data comprises information about a target gas type for leak detection test and the second set of leak test data represents an identified gas type by a second gas sensor of the sensor unit. Thus, the system is configured to output the warning indicator upon identifying the target gas type.

In some embodiments, the system comprises one or more output devices configured to output the signal to a user of the system and the signal is an audible signal, a visual signal, haptic signal and/or a tactile signal.

In some embodiments, the sniffer probe comprises the output device, such as a lighting unit or a vibrating unit for providing said signal. Additionally, or alternatively, the output device may be a monitor, a screen configured to communicate the signal to a user of the system.

One or more cameras may be configured to capture real-time images of the test object and the sniffer probe. The system may be configured such that real-time captured images by one or more cameras may be presented on a monitor.

In some embodiments, the sniffer probe comprises one or more probe head ports and a clamp arranged for shifting between an open position for receiving a testing point, such as a pipe section and a closed position for enclosing the testing point and forming a chamber around the testing point in the closed position and at least one of said probe head ports opens into the inside of the chamber. The sniffer probe may comprise one or more sensors of the sensor unit.

In some embodiment, the clamp comprises a contact body configured for providing a physical contact between the testing point and for activating a timer configured to monitor a sniffing time value of the sniffer probe on the testing point and a sniffing action of the sniffer probe in response to said physical contact. The contact body may be a part of an inner surface of the clamp. In some embodiments, the system is configured to measure a velocity of the sniffer probe and/or a leak rate and/or a gas type and/or a sniffing time of the sniffer probe in response to detecting said physical contact.

Outputting the confirmation indicator of the positioning of the sniffer probe may thus mean that the sniffer probe has encapsulated a testing point on a test object that is to be leak tested, and the leak detecting process is triggered and the movement and analysis of the air/gas is directed into the connected leak detecting mass spectrometer to measure the amount of refrigerant or tracer gas that is leaking from the encapsulated testing point. Thus, based on output confirmation indicator of the positioning of the sniffer probe, the system is configured to monitor and/or control leak detecting process parameters such as the speed of the sniffer probe, sniffing time, gas type, gas leak rate.

In some embodiments, the first set of leak test data comprises information about a target velocity curve of the sniffer probe and the system is configured to measure the velocity curve of the sniffer probe and output the warning indicator when the measured velocity curve deviates from the target velocity curve. This implies that the system may be configured to output the confirmation indicator when the measured velocity curve is within a range defined by the target velocity curve.

In some embodiments, the leak detector unit comprises a leak detector, a pump, a gas sensor, and a purge gas supply in fluid communication with the sniffer probe. The leak detector may comprise one or more sensors of the sensor unit.

In some embodiments, the system comprises a motion-generating mechanism configured for moving the sniffer probe along a leak detection test path formed based on the first set of leak test data. The motion generating mechanism may be configured to move the sniffer probe to and between one or more testing points and with a predefined velocity of the sniffer probe. Advantageously, potential operator errors can be reduced by using an automatic or robotically controlled system for the leak detection test.

In some embodiments, the system comprises a robot controller configured for controlling the leak detection test by controlling the motion-generating mechanism by operating the sniffer probe based on the difference level between the first set of leak test data representing a target distance of the sniffer probe to the testing point and the second set of leak test data representing a monitored distance of the sniffer probe to the testing point such that the difference level is minimized. For example, the motion-generating mechanism may be configured to move the sniffer probe such that the positioning of the sniffer probe is within a distance from the target position of the testing point.

Generally, the present disclosure provides a mobile system for testing of multiple test points including difficult-to-reach areas for testing points, such as test points behind other parts of the test object, behind various pipelines, or behind visible areas to the operator. Even minor leaks, such as leaking less than 4 grams per year, may be detected with the present disclosure. Due to the mobility of the system, the sniffer probe may reach closer than 10-12 mm to a potential leak point.

In some embodiments, the system comprises a memory configured to store the status of the leak detection test for each one of the testing points of the identified test object. Accordingly, the status of all testing points of a test object may be stored.

In some embodiments, the system comprises a memory configured to store the first leak test data.

In some embodiments, the system comprises a memory configured to store the second set of leak test data.

Thus, the system may be configured to store data representing the status of the verification of one or more of the following: the positioning of the sniffer probe, speed of the sniffer probe, the leak-rate, the gas type and the sniffing time. Said data may be stored for each one of the testing points and may further comprise date-time data. The data may be analysed in real time and provide feedback to an upstream operator on a production line, which facilitates enhancing the product manufacturing quality level.

The present disclosure can therefore deliver more consistent and accurate leak detection, ultimately allowing higher product quality and reducing costs associated with undetected leaks.

The present disclosure further relates to a computer-implemented method.

In some embodiments, the first set of leak test data comprises information about a number of testing points of the identified test object and the method comprises outputting the signal indicative of the status of the leak detection test for each one of the testing points of the identified test object.

In some embodiments, the method comprises storing the status of the leak detection test of each of the testing points of the identified test object.

In some embodiments, the first set of leak test data comprises information about a target positioning of the testing point and the method comprises measuring the positioning of the sniffer probe and outputting the confirmation indicator when the difference level between the target positioning of the testing point and the monitored positioning of the sniffer probe is within a position threshold value, such as between 0-250 mm. In some embodiments, outputting the signal comprises outputting a positioning confirmation indicator when the sniffer probe has a distance of 250 mm or less to the testing point.

In some embodiments, the system is configured to measure a velocity of the sniffer probe and/or a leak rate and/or a gas type and/or a sniffing time of the sniffer probe in response to receiving the confirmation indicator of the positioning of the sniffer probe.

In some embodiments, the method comprises measuring a velocity of the sniffer probe and/or a leak rate and/or a gas type and/or a sniffing time of the sniffer probe in response to receiving the confirmation indicator of the positioning of the sniffer probe.

In some embodiments, the first set of leak test data comprises information about a target sniffing time value of the sniffer probe on the testing point and the method comprises measuring a sniffing time value of the sniffer probe on the testing point and outputting the confirmation indicator when the measured sniffing time value corresponds to the target sniffing time value.

In some embodiments, measuring the sniffing time and/or a start of a sniffing action is triggered based on output positioning confirmation indicator. The positioning confirmation indicator may indicate that the sniffer probe is within a predefined distance from the given testing point.

In some embodiments, the first set of leak test data comprises information about a target velocity (or speed) of the sniffer probe and the method comprises measuring the velocity (or speed) of the sniffer probe and the method comprises outputting the warning indicator when the measured velocity (or speed) deviates from the target velocity (or speed). Measuring the velocity (or speed) of the sniffer probe may be triggered when the positioning of the sniffer probe is verified, based on the output positioning confirmation indicator. The velocity of the sniffer probe may be measured continuously.

In some embodiments, the system is configured to reduce a speed of the sniffer probe in response to receiving the confirmation indicator of the positioning of the sniffer probe. The sniffer probe may move at a lower speed or may be in standstill within the target distance range.

In some embodiments, the first set of leak test data comprises information about a threshold leak rate and the method comprises measuring a leak rate and outputting the warning indicator when the measured leak rate is above the threshold leak rate. The threshold leak rate may be predefined based on requirements from regulations, standards/codes and branch guidelines. The measured leak rate may be based on the measurements of the gas/air mixture led to the leak detection unit having a mass spectrometer and analysing the gas in real time.

In some embodiments, the first set of leak test data comprises information about a target gas type for leak detection and the method comprises identifying a gas type by a gas sensor and outputting the warning indicator when the identified gas type deviates from the target gas type.

In some embodiments, the method comprises forming the first set of leak test data by means of artificial intelligence employing a machine learning algorithm and the machine learning algorithm has been trained on a plurality of test objects.

In some embodiments, the object identification data of the test object is 2D data or 3D data.

The machine learning algorithms (may also be referred to as machine learning models, neural networks, and so forth) are implemented in some embodiments using publicly available suitable software development machine learning code elements, for example, such as those which are available in Python, Keras and TensorFlow or in any other suitable software development platform, in any manner known to be suitable to someone of ordinary skill in the art.

The presently disclosed approach may be based on a neural network. As used herein, the term "neural network" refers to an interconnected group of natural or artificial neurons that uses a computational/mathematical model for information processing based on a connectionist approach to computation. Neural networks are adaptive systems that change structure based on external or internal information that flows through the network. They are used to implement non-linear statistical data modelling and may be used to model complex relationships between inputs and outputs. In this case the input can be point cloud data and the output can be detection of testing points in the input point cloud data.

In some embodiments, the method comprises forming the first set of leak test data indicative of positioning of the testing points by means of artificial intelligence employing a machine learning algorithm that has been trained on a plurality of test objects.

In some embodiments, the method comprises storing the first set of leak test data of one or more testing points of one or more test objects.

In some embodiments, the method comprises storing the second set of leak test data of one or more testing points of one or more test objects.

In some embodiments, the method comprises determining the difference level between the first set of leak test data representing a target distance of the sniffer probe to the testing point and the second set of leak test data representing a monitored distance of the sniffer probe to the testing point. The method may further comprise operating the sniffer probe by moving the sniffer probe based on the difference level between the first set of leak test data and the second set of leak test data such that the difference level is minimized.

In some embodiments, the method comprises operating the sniffer probe by an operator.

In some embodiments, the method comprises operating the sniffer probe by a robotic motion controller.

In some embodiments, the method comprises transferring data to the robotic motion controller for controlling a movement of the sniffer probe and moving the sniffer probe based on transferred data.

In some embodiments, the system may be configured to perform a method as described in any one of the embodiments.

In some embodiments, the disclosed method may comprise adapting a system as described in any one of the embodiments.

### BRIEF DESCRIPTION OF THE DRAWINGS

The above aspects, features and advantages of the disclosed technology will be more fully appreciated by reference to the following illustrative and non-limiting detailed description of example embodiments of the present disclosure, when taken in conjunction with the accompanying drawings, in which:
Fig. 1 is a schematic illustration of a system for a leak detection test in accordance with some embodiments;
Fig. 2a-2b are schematic illustrations of a leak detection system comprising a hand-held sniffer probe in accordance with some embodiments;
Fig. 3 is a schematic illustration of an output device in accordance with some embodiments;
Fig. 4 is a schematic illustration of a leak detection system comprising a motion-generating mechanism in accordance with some embodiments;
Fig. 5 is a schematic flowchart representation of a method for controlling a system for leak detection test of a testing point in accordance with some embodiments;
Fig. 6 is an exploded view

### DETAILED DESCRIPTION OF THE DRAWINGS

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in an apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

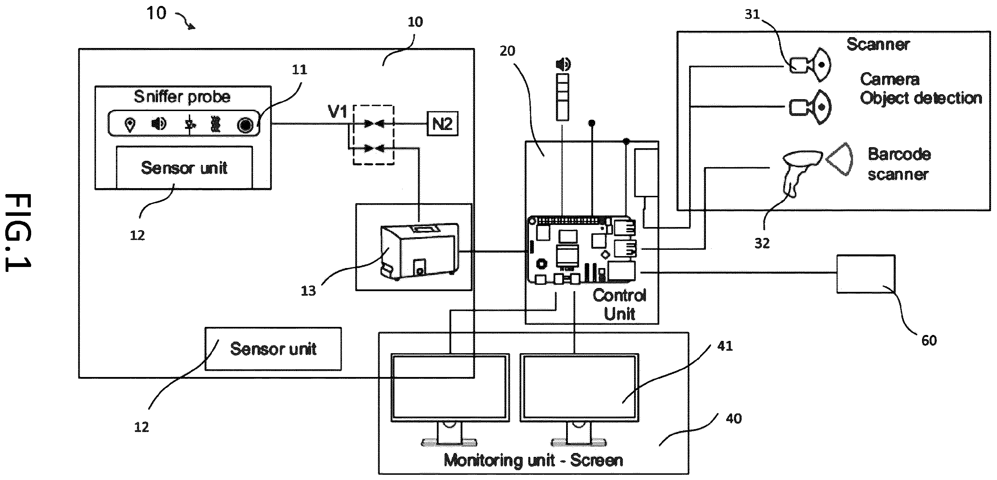

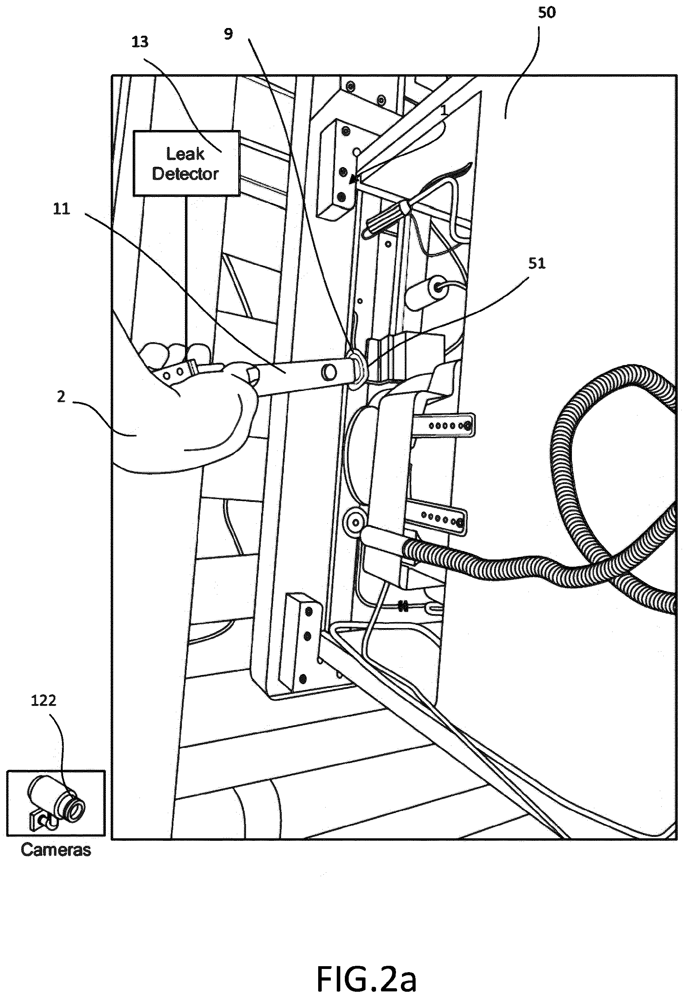

Fig. 1 is a schematic illustration of a system 1 for a leak detection test, such as a leak detection test system 1 and Fig. 2a shows a schematic illustration of a system 1 for a leak detection test comprising a sniffer probe 11.

The system 1 comprises a leak detector unit 10. The leak detector unit 10 comprises a sniffer probe 11. The leak detector unit 10 is configured for leak testing a test object 50 by sniffing a testing point 51 of the test object 50. The test object 50 may be a heat pump, a cooler, a freezer, a tumble-drier, an air conditioner, or any other product comprising a cooling system. The testing point 51 as used herein is a testing section of the test object 50 where a test for checking the presence of a leak is performed. The testing point 51 may be a pipe-section of the test object 50.

In this example, the test object 50 is a refrigerator. The testing point 51 is a components, a pipe of the refrigerator. The leak detector unit 10 is configured to detect leaks by sniffing on the outside circumference of the tube containing the detectable gas, refrigerant or other tracer gases, that are detectable by the sniffer probe 11.

Fig. 1 shows a leak detector unit with a sniffer probe 11 and a leak detector 13. The leak detector 13 comprises a gas sensor and a purge gas supply in fluid communication with the sniffer probe 11. The leak detector 13 may have a first communication direction for the gas sensor and a second communication direction for the purge gas supply. The gas sensor and the purge gas supply may be configured for communication through a common conduit for the fluid communication with the sniffer probe 11 through one or more probe head ports. Alternatively, the leak detector 13 may communicate with the sniffer probe 11 with a separate conduit with no purging applied to that conduit. The leak detector 13 may communicate with the sniffer probe 11 with the conduit with no purging applied to that conduit.

In some examples, the sniffer probe 11 as used herein may comprise a gas sensor with an applied suction resulting in a fluid communication and a communication direction towards the gas sensor. Thus, in some examples, an external leak detector 13 may be omitted. Thus, in some examples the leak detector unit 10 comprises a handheld, battery-operated sniffer probe 11. The sniffer probe 11 may be equipped with a gas detecting sensor calibrated for a specific gas.

Moving on, the system 1 comprises a sensor unit 12 configured to monitor the leak detection test in real time. The sensor unit 12 comprises a plurality of sensors.

The sensor unit 12 comprises a gas sensor configured to monitor a (gas) leak rate and a gas type. The gas sensor may be an infrared gas sensor and/or a mass spectrometer. The gas sensor may comprise a mass-spectroscopy detector or turbo molecular helium or hydrogen detector. These should merely be considered examples and hence, other comparable detectors suitable for gas detection may exist.

The sensor unit 12 comprises a velocity sensor such as an accelerometer configured to monitor the velocity curve of the sniffer probe 11.

The sensor unit 12 comprises a timer sensor such as a timer configured to monitor a sniffing time value of the sniffer probe on the testing point.

The sensor unit 12 comprises a camera 122, as a positioning sensor. The camera 122 is configured to monitor the positioning of the sniffer probe 11 and the testing point 51.

One or more sensors of the sensor unit 12 may be an integral part of the sniffer probe 11 or may be a separate unit of the system 1. For example, the sniffer probe 11 may comprise a gas sensor suitable for detecting any given gas. The sniffer probe 11 may further comprise a camera 122 attached thereon or a laser system, such that the position of the sniffer probe 11 and/or the testing point 51 is monitored in real time. Moreover, an accelerometer may be arranged on the sniffer probe 11.

The sensor unit 12 can have any combination of the various elements shown in Fig. 1. One or more of the sensors can be located externally to the leak detector unit 10. For example, a set of monitoring parameters of the leak detection test system 1 in real time may be obtained by the sensors of the sensor unit 12 located within different elements of the overall system 1.

In some examples, the sniffer probe 11 comprises, among others, audio indication, light indication and the positioning sensor for detecting position of the sniffer probe 11.

The system 1 further comprises a scanner 31 configured for scanning and thereby identifying the test object 50 which is to be tested for leak detection. The scanner 31 may be a barcode reader 32. The scanner 31 may be the camera 122.

The system 1 further comprises a control circuitry 20. The control circuitry 20 may physically comprise one single circuitry device. The control circuitry 20 may comprise one or more processors, such as a central processing unit (CPU), microcontroller, or microprocessor. The one or more processors may be configured to execute a program code stored in a memory, in order to carry out various functions and operations of the system 1 in addition to the methods disclosed herein. The processor(s) may be or include any number of hardware components for conducting data or signal processing or for executing a computer code stored in the memory.

The processing unit is configured to receive object identification data of the test object 50 by scanning the test object 50 by the scanner 31, the barcode reader 32 or the camera 122. Based on scanning of the test object 50 thus based on the scanning data, the system is configured to identify the test object 50.

Then, the processing unit is further configured to form a first set of leak test data for the identified test object 50. The first set of leak test data comprises information about a number of testing points 51 of the identified test object 50 and for each testing point 51 coordinates of the respective testing point 51.

The processing unit is configured to receive a first set of leak test data for the identified test object 50. The first set of leak test data comprises information about a set of target process parameters for the leak detection test of said test object 50. One or more of the sets of target process parameters are predefined parameters. The target process parameters comprise a predefined/threshold sniffing time value of the sniffer probe 11 on each one of the testing points 51.

The processing unit is further configured to receive a second set of leak test data by the sensor unit 12 of the leak detector system 1. The second set of leak test data represents a set of monitoring parameters obtained by the sensor unit 12 in real time during the leak detection test of the testing point 51. The second set of leak test data comprises information about, for each testing point 51, coordinates of the sniffer probe 11 with respect to the respective testing point 51 to be tested, and a sniffing time value of the sniffer probe 11 on the respective testing points 51 in real time.

The processing unit is further configured to determine a difference level between the first set of leak test data and the second set of leak test data. Determining a difference level may comprise comparing the target or the predefined process parameter with a respective parameter which has been monitored. The processing unit is then configured to output a signal indicative of a status of the leak detection test based on the difference level obtained from the comparison of said target parameter and monitored parameter.

The output signal may be an indicator to a user 2 of the system 1. The output signal may be a confirmation indicator, such as a verification indicator representing that the leak testing fulfils/passes the testing criteria defined by the first set of data.

The processing unit is further configured to output a warning indicator, such as an error indicator representing that the leak testing does not fulfil/fails the testing criteria of the leak detection test.

The leak detection system 1 further comprises one or more output devices 40 configured to output the indicator to the user 2 of the system 1.

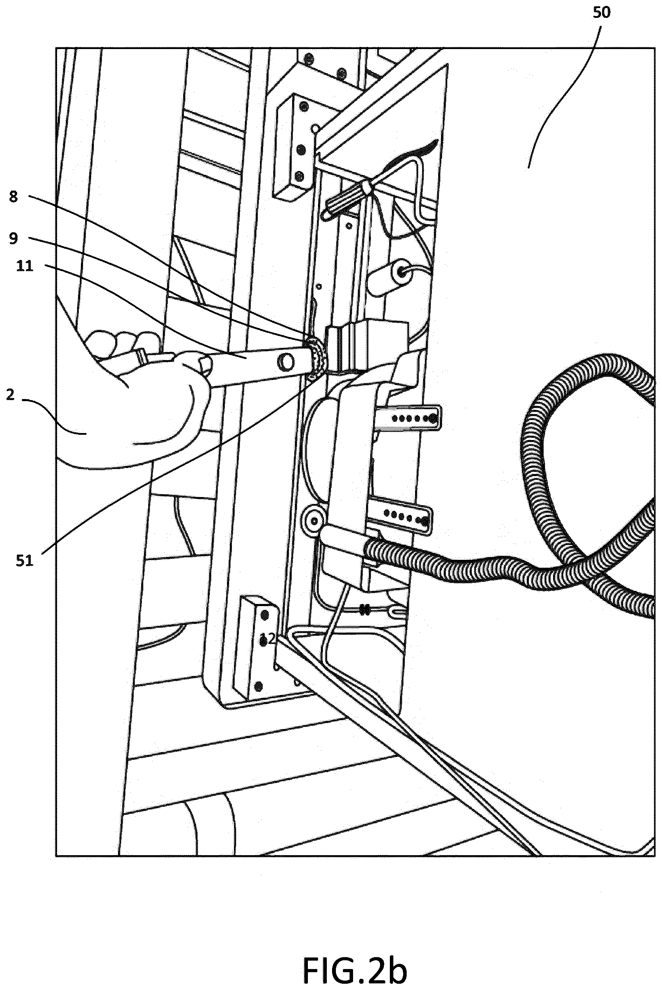

Fig. 2b shows a sniffer probe 11 and an indicator 8. The indicator 8 is a visual indicator 122 and is shown with a dotted circumference area of a clamp 9 of the sniffer probe 11 signalling a confirmed status of the testing point 51 to the user 2. Specifically, the sniffer probe 11 comprises an output device comprising a lighting unit for indicating the indicator 8 to the user 2. The clamp 9 of the sniffer probe 11 turns to a green colour or to a red colour for signalling the confirmed status or faulty status, respectively. For example, when the positioning of the sniffer probe 11 is within a range defined by the first set of data in the proximity of the testing point, the indicator 8 turns to green temporarily. Afterwards, sniffing time is activated. Additionally, or alternatively, the indicator 8 turns to green after reaching the predefined sniffing time.

Thus, upon a confirmation of the positioning of the sniffer probe 11, such as when the sniffer probe 11 has encapsulated the joint on the pipe that is to be leak checked into a chamber, the sniffing action is triggered and the movement and analysis of the air/gas is directed into the connected leak detecting mass spectrometer to measure the amount of refrigerant or tracer gas that is leaking from the encapsulated pipe area.

The indicator 8 may be an audible indicator, a visual indicator, a haptic indicator and/or a tactile indicator. The sniffer probe 11 may therefore comprise a vibrating unit, a lighting unit, or any other unit for indicating the status of the leak detection test to the user 2.

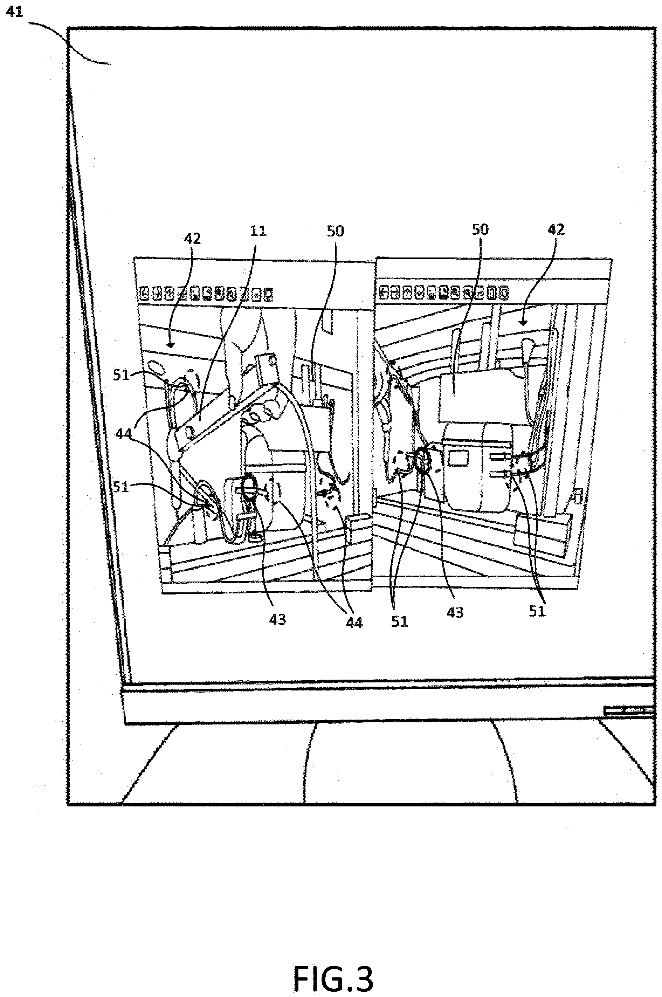

In addition to or alternative to the output device, e.g. the indicator 8, of the sniffer probe 11, the system may comprise a monitoring screen 41. Fig. 3 shows an output device 40 in accordance with some embodiments. The system 1 is configured to display the status of the leak detection test of each testing point 51, such as pass vs. fail status, by light and/or by colour and/or by sound and/or by other representation on the screen 41. The screen 41 shows real-time captured images 42 by two cameras 122 monitoring the test object 50. There may be a plurality of cameras. This would allow improving the presentation of the test object 50 and testing points 51. The circular lines represent the testing points 51. Initially, the testing points 51 may be represented by circles with dashed lines 44 on the image of the test object 50 shown on the screen 41. The solid circular lines 43 on the screen 41 represents the testing point 51 which has a confirmed status. The system 1 is configured to output said confirmation status in the form of solid circular lines 43 for each one of the testing points 51 of the test object 50.

The system 1 is further configured to output a warning indicator when a monitored process parameter does not correspond to a target process parameter. This implies that when the monitored parameter deviates from the target parameter above a threshold value, such that when the monitored set of data falls under a range not defined by the first set of data, the system 1 is configured to indicate a faulty status of the leak detection test of the testing point 51 being tested. The faulty status may be indicated by a change in the colour of the dashed or solid circular lines 43, 44 and/ or by a change in the colour of the clamp 9 of the sniffer probe 11.

In a production line, each test object 50 has a predefined number of testing points 51. These testing points 51 are marked in a coordinate system that the camera 122 can locate. The test object 50 is verified based on various criteria such as about whether all predefined leak testing points 51 have been visited by the sniffer probe 11 and whether the sniffer probe 11 has been standing or passing with a predefined time or velocity. A pass or fail condition result have been output for each of the predefined leak testing points 51 by means of the indicators. A next test object on the production line may be leak tested if/when all criteria has a confirmation indicator. Based on the indicator, i.e. faulty or confirmed, fail or pass, the test object may be transferred to a repair/rework shop or further to the production process.

Thus, the system 1 can display results of the leak detection test, such as pass, fail, insufficient/ongoing process, by light, colour, sound, or other means, and by displaying it on monitors for operators placed elsewhere on production lines or in offices etc.

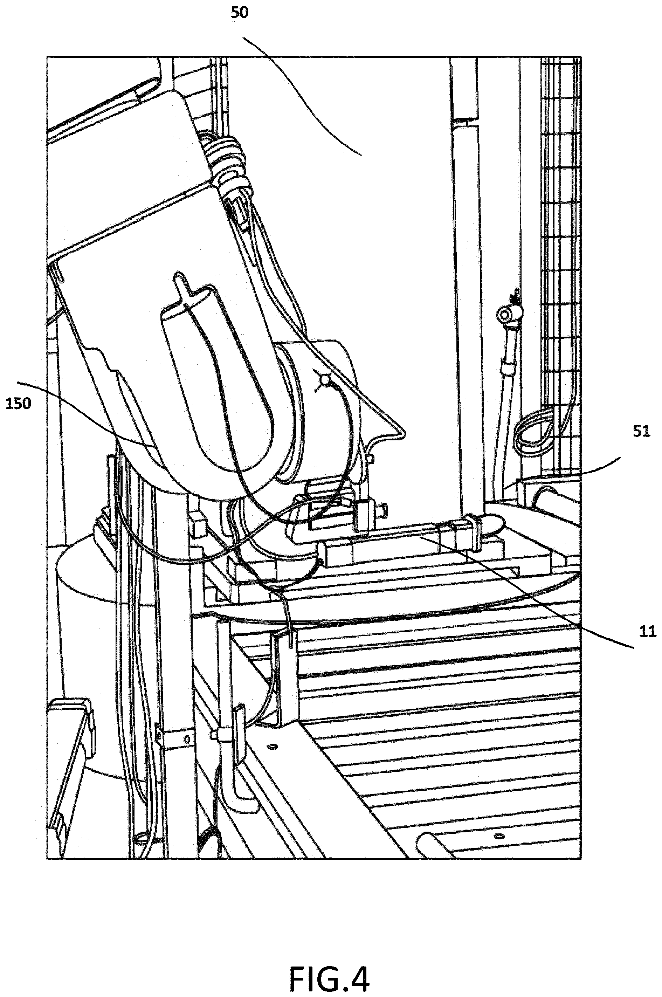

Moving on, Fig. 4 shows the leak detection system 1 in accordance with some embodiments. The system 1 comprises a motion-generating mechanism, such as a robot arm 150, configured for moving the sniffer probe 11 along a leak detection test path formed based on the first set of leak test data. Moreover, the leak detection system 1 comprises a robot controller configured for controlling the leak detection test by controlling the sniffer probe 11. The system 1 is configured such that the sniffer probe 11 is moved by the robot arm 150 based on a target distance of the sniffer probe 11 to the testing point 51.

Moreover, the system 1 further comprises a memory 60.

The memory may include database components, object code components, script components, or any other type of information structure for supporting the various activities of the present description. The memory optionally includes high-speed random-access memory, such as DRAM, SRAM, DDR RAM, or other random-access solid-state memory devices; and optionally includes non-volatile memory, such as one or more magnetic disk storage devices, optical disk storage devices, flash memory devices, or other non-volatile solid-state storage devices.

According to an exemplary embodiment, any distributed or local memory device may be utilized in the realization of the present inventive concept. The control circuitry 20 may be distributed, e.g. such that one or more processors of the control circuitry 20 is provided as integral elements of the system 1 or any other unit of the system 1.

The leak detection system 1 can have any combination of the various elements shown in Fig. 1. Moreover, the leak detection system 1 may comprise further elements than those shown in Fig. 1. One or more of the elements can be located externally to the leak detection system 1. For example, data may be stored in a remote server.

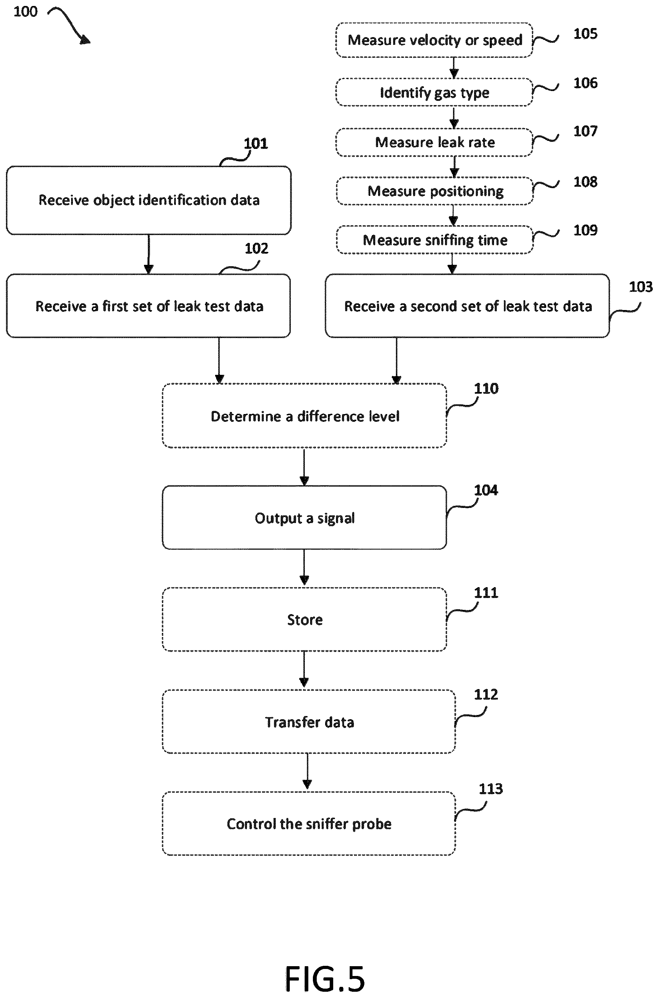

Turning now to the drawings, and to Fig. 5 in particular, there is a schematic flowchart representation of a method for controlling a system for leak detection test of a testing point in accordance with some embodiments.

The method S100 is preferably a computer-implemented method S100, performed by a processing unit of the leak detection system. The processing unit may for example comprise one or more processors and one or more memories coupled to the one or more processors. The one or more memories store one or more programs that perform the steps, services and functions of the method S100 disclosed herein when executed by the one or more processors.

The method S100 for controlling a leak detection test of a test object. The method S100 comprises receiving S101 object identification data. The object identification data is received S101 by scanning the test object. The object identification data comprises information about the product model, that is the model of the test object. Based on a tag, such as a barcode, QR Code, rfid tag, the object may be identified. The method S100 then comprises receiving S102 the first set of leak test data, based on the object identification data. Receiving S102 the first set of leak test data may also be referred as obtaining or generating the first set of leak test data. The first set of leak test data may be a recipe, such as a target condition for leak testing for the identified test object.

The method S101 further comprises receiving S103 a second set of leak test data by a sensor unit. The received S103 second set of leak test data is based on monitoring a set of parameters in real time. Thus, the method comprises, in some examples, measuring S105 velocity and/or speed of the sniffer probe, and/or identifying 106 gas type, and/or measuring S107 a leak rate, and/or measuring S108 positioning of the sniffer probe and/or the testing point and/or measuring S109 sniffing time.

The method S101 further comprises outputting S104 a signal indicative of a status of the leak detection test based on a difference level between the first set of leak test data and the second set of leak test data. The method in some embodiments comprises determining S110 the difference level. Determining 110 the difference level may be referred as comparing and/or evaluating.

Outputting S104 the signal is based on the determined S110 difference level, i.e. based on the comparison and/or evaluation of the received data S102, S103. The output S104 signal may be a confirmation indicator or a warning indicator. The confirmation indicator is output S104 when a measured parameter of the second set of leak test data corresponds to the target parameter of the first set of leak test data. The warning indicator is output 104 when the measured parameter deviates from the target parameter.

The test object may comprise a plurality of testing points. In some embodiments, the first set of leak test data comprises information about a number of testing points of the identified test object i.e. information about all testing points, coordinates of each testing point and leak testing target parameters of each testing point.

In some embodiments, the method comprises outputting S104 the signal indicative of the status of the leak detection test for each one of the testing points of the identified test object. In some embodiments, the method comprises storing S111 the status of the leak detection test of each of the testing points of the identified test object.

In some embodiments, a received S102 first set of leak test data comprises forming the first set of leak test data indicative of positioning of the testing points of the test object by means of artificial intelligence employing a machine learning algorithm. The machine learning algorithm is trained on a plurality of test objects. Input to the machine learning algorithm is image data of the plurality of test objects. A neural network is fed by object identification data. The object identification data of the test object may be 2D data or 3D data. The machine learning algorithm outputs positioning of the testing points of the identified test object. For example, output may be a vector of points making dashed circular lines 43 of the test object 50 in the image, as shown in Fig. 3.

In some embodiments, the method comprises storing S111 the first set of leak test data of one or more testing points of one or more test objects and/or the second set of leak test data of one or more testing points of one or more test objects. Storing S111 data and/or status of the leak testing allows tracking and logging data, so that the positioning of the sniffer probe, leak testing process parameters, a potential leak, and count of leak points are monitored and confirmed during the leak detection test.

In some embodiment, the method comprises operating, such as controlling S113, the sniffer probe by an operator, such as by a user 2. For example, upon arrival of the test object 50 requiring leak checking, which is charged with a tracer gas or refrigerant charge, the test object 50 is identified and the first set of leak test data is obtained, that is the leak test requirements such as the number of testing points 51, the length of the sniffing time for each testing point 51, maximum leak rate level for each testing point 51 as well as a maximum overall leak rate level. Then the user 2 moves the sniffer probe 11 to one of the testing points 51 until the light or sound confirm that both the position and time are logged and verified. Upon receiving the confirmation indicator, the user 2 can move to the next non-checked testing point 51 until all testing points 51 have been leak checked.

In some embodiments, the method comprises determining S110 the difference level between the first set of leak test data representing a target distance of the sniffer probe to the testing point and the second set of leak test data representing a monitored distance of the sniffer probe to the testing point. The method further comprises controlling S113, e.g., operating, the sniffer probe, by moving the sniffer probe based on the difference level such that the difference level is minimized, such that the sniffer probe travels a distance to reach the target distance to be within the position threshold value, such as to be between 0-250 mm from the testing point.

In some embodiments, the method comprises transferring S112 data to the robotic motion controller for controlling a movement of the sniffer probe and moving the sniffer probe. Based on transferred data, an operator or a robot arm may control S113 the sniffer probe, such that the sniffer probe's positioning corresponds to a target positioning.

Executable instructions for performing these functions are, optionally, included in a non-transitory computer-readable storage medium or other computer program product configured for execution by one or more processors of a system for a leak detection test.

The herein disclosed technology has been presented above with reference to specific embodiments. However, other embodiments than the above described are possible and within the scope of the claims. Different method steps than those described above, performing the method by hardware or software, may be provided within the scope of the claims. Thus, according to some embodiments, there is provided a non-transitory computer-readable storage medium storing one or more programs configured to be executed by one or more processors of a system for a leak detection test, the one or more programs comprising instructions for performing the method according to any one of the above-discussed embodiments.

The control circuitry 20, e.g. the processor associated with the system may be or include any number of hardware components for conducting data or signal processing or for executing computer code stored in memory. The system may accordingly have an associated memory, and the memory may be one or more devices for storing data and/or computer code for completing or facilitating the various methods described in the present description. The memory may include volatile memory or non-volatile memory. The memory may include database components, object code components, script components, or any other type of information structure for supporting the various activities of the present description. According to some embodiments, any distributed or local memory device may be utilized with the systems and methods of this description. According to some embodiments embodiment the memory is communicably connected to the processor (e.g., via a circuit or any other wired, wireless, or network connection) and includes computer code for executing one or more processes described herein.

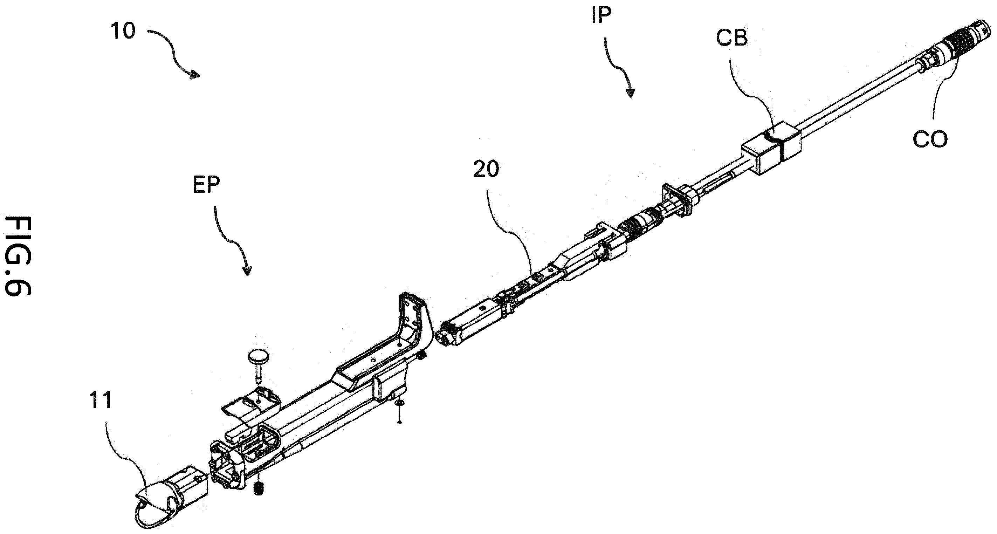

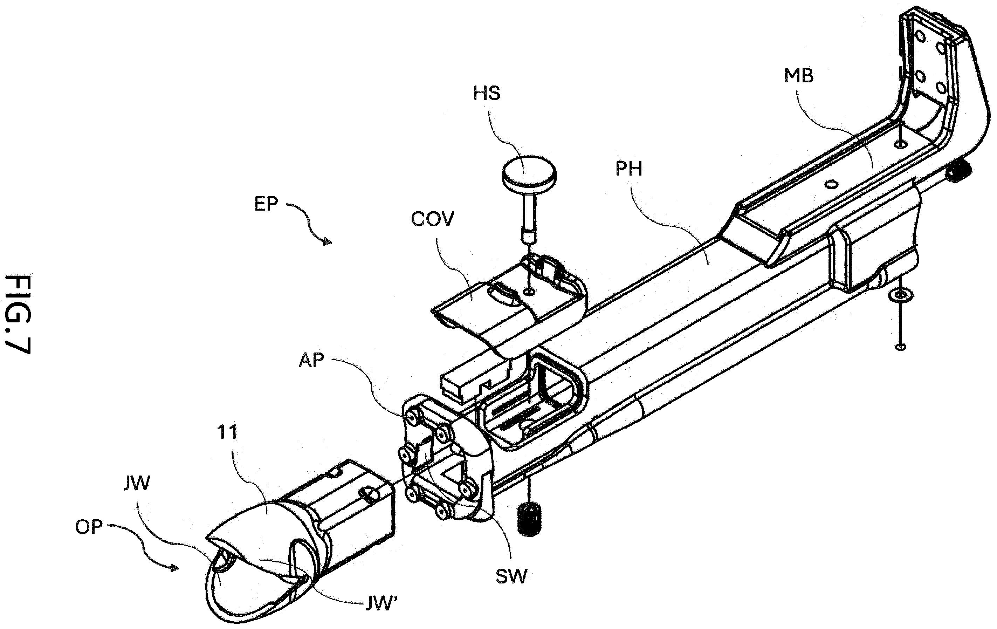

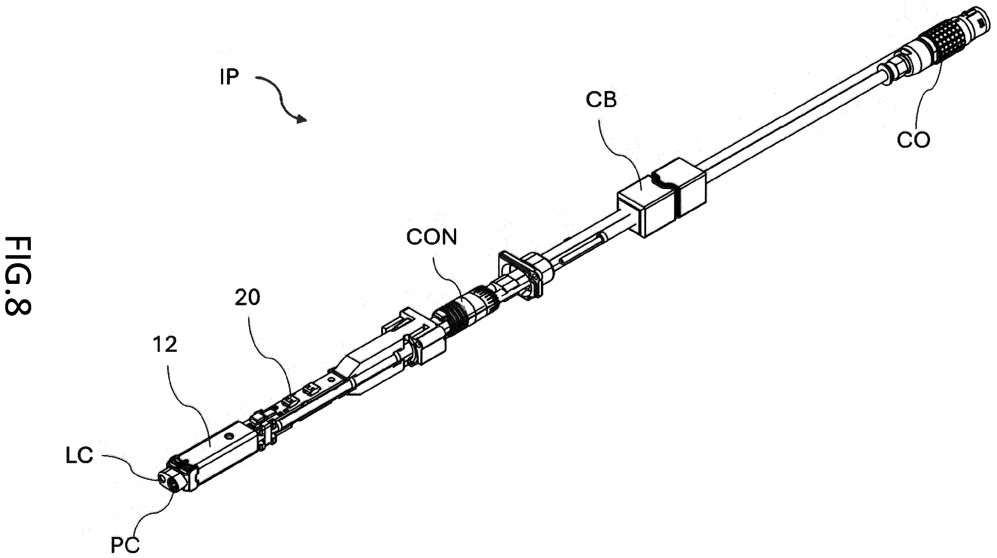

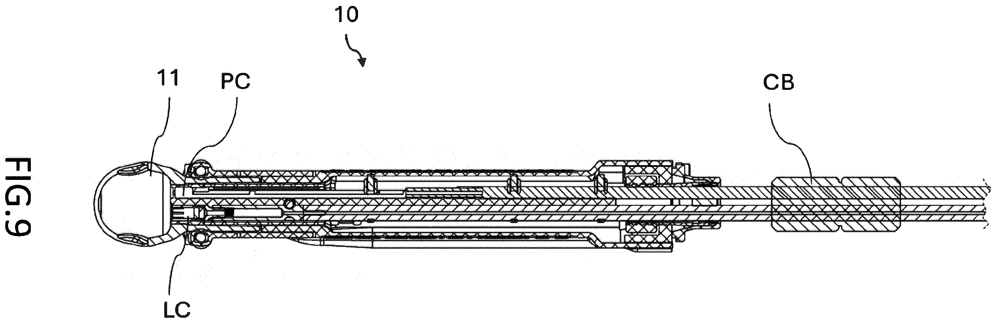

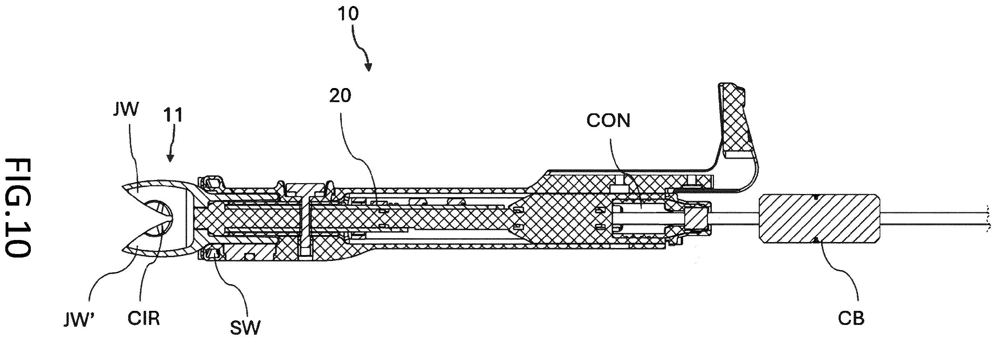

Fig. 6 shows an exploded trimetric view of a leak detector unit 10, according to an embodiment of the invention. In Fig. 6, an external portion EP and an internal portion IP is seen, which are further discussed in Figs. 7 and 8 respectively. It is to be understood, that when assembled, the internal portion IP is inserted at least partly into the external portion EP, by axially moving the portions towards each other. The assembled leak detector unit 10 can be seen in Fig. 9 and 10. From Fig. 6 it can be seen, that the leak detector unit comprises a distal end, having a sniffer probe 11, and a coupling CO at a proximal end. The coupling CO is adapted to connect to a gas sensor (not shown), such as a mass-spectroscopy detector or turbo molecular helium or hydrogen detector. The coupling CO is adapted to provide a data connection, a power connection and a first and second fluid connection to auxiliary equipment, such as the gas sensor. The leak detector unit is further adapted with a control circuitry, adapted to receive and optionally process signals from at least the sniffer probe 11 and a contact body CB, the contact body CM configured to determine a connection between the sniffer probe 11 and a pipe (not shown), and further to communicate instructions between the leak detector unit 10 and auxiliary equipment, such as for readying the gas sensor to receive a gas sample, to purge the sniffer probe 11, to initiate image obtaining and to communinacate with a memory to store data obtained.

Fig. 7 shows the external portion EP of the leak detector unit 10, comprising a probe housing PH. The probe housing PH is adapted with a sniffer probe 11 located at a distal end of the leak detector unit 10, the sniffer probe 11 having an opening OP comprising first and second elastomeric jaws JW, JW' adapted to receive a pipe (not shown) and translate a leaked gas to the sensor unit 12, by positioning the jaws JW, JW' around a circumference of a pipe (not shown, see e.g. FIG. 2b). The elastomeric jaws JW, JW' of the sniffer probe 11 is adapted to seal around the pipe, to ensure that only gas leaking from the surrounded portion of the pipe reaches the sensor unit 12. The probe housing PH further comprises a mounting bracket MB, adapted to fixate auxiliary equipment, such as a camera 122 (not visible), the camera positioned to obtain images of the pipe, the sniffer probe 11 and elements near said sniffer probe 11. It is to be understood, that the camera is adapted to identify and/or document testing points 51 for quality purposes. The probe housing PH defines an internal void adapted to contain a portion of the internal portion IP of the leak detector unit 10, as can be seen in Fig. 6, 8, 9 and 10. The probe housing PH further comprises a cover COV, which can be fixated to the probe housing PH by a hand screw HS, for easy assembly/disassembly. When the cover COV is removed, a user can gain access to one or more of the sensor unit 12 and the electric circuitry 20 (not visible, see Fig. 8). The probe housing PH further comprises additional purge channels AP, adapted to purge ambient air around the sniffer probe 11. Within the distal end of the probe housing PH, a switch SW is located. The switch SW is configured to measure or detect a pressure or force applied to the sniffer probe 11, when deforming the sniffer prope 11 around a pipe. It is to be understood, that the sniffer probe 11 deforms/compresses around a pipe in order to provide a seal between the jaws JW,HW' of the sniffer probe 11 and an outer surface of said pipe.

In some embodiments, the switch SW may be adapted as a force sensor SW.

In a preferred embodiment the force sensor SW is configured to measure a force applied to the sniffer probe 11, the force sensor SW in data connection with the contact body CB. It is to be understood, that the contact body CB may receive a signal from the force sensor SW, and wherein the contact body CB is configured to determine that a seal between a pipe and the sniffer probe 11 has been made, upon the signal from the force sensor SW exceeds a threshold.

In another preferred embodiment, the switch SW is an on/off switch adapted to detect a compression or deformation of the sniffer probe 11, the switch SW in data connection with the contact body CB, and wherein the switch SW sends a signal to the contact body CB when the compression/deformation of the sniffer probe 11 exceeds a threshold which activates the switch SW to send said signal to the contact body CB.

Fig. 8 shows a trimetric view of the internal portion IP of the leak detector probe 10. At a distal end, the internal portion IP comprises a sensor unit 12, the sensor unit 12 comprising a leak channel LC and a purge channel PC. It is to be understood, that the sensor unit 12, when the leak detector unit 10 is assembled, is located at or near the sniffer probe 11. The purge channel PC is fluidically connected to an auxiliary gas source, adapted to purge at least any gas within the sniffer probe 11. The leak channel is adapted to receive and translate gas from within the sniffer probe 11 to an auxiliary device, preferably a gas sensor 12 (not shown). It is further to be understood, that the purge channel PC and the leak channel LC is fluidically connected to auxiliary equipment through a connector CON, and the coupling CO, located at the proximal end of the internal portion IP. The internal portion further comprises a contact body CB, adapted to sense a seal between the sniffer probe 11 and a pipe. It is to be understood, that the contact body CB is in data connection with the electric circuitry 20, at least to send a signal to a processor, the signal determining that the sniffer probe 11 is sealed around a pipe, and the leak detector unit is ready to purge and/or obtain a gas sample from the pipe enveloped by the sniffer probe 11.

Fig. 9 is a cut view from below, of the assembled leak detector unit 10. At a proximal end, the sniffer probe 11 is located. At a proximal end of the sniffer probe 11, the sensor unit 12 is located, with the purge channel PC and the leak channel LC. At a proximal end, the contact body CB is located. It is to be understood, that the contact body CB is adapted to sense deformation of the jaws JW, JW' of the sniffer probe 11, which indicates a seal between the sniffer probe 11 and a pipe to be inspected.

In preferred embodiments, the purge channel PC is adapted to provide a purge pressure of between 2 and 10 bar of pressure.

In more preferred embodiments, the purge channel PC is adapted to provide a purge pressure of between 3 and 8 bar of pressure.

In most preferred embodiments, the purge channel PC is adapted to provide a purge pressure of between 4 and 6 bar of pressure.

In preferred embodiments, the leak channel LC is adapted to provide a negative pressure wherein between 100 and 200 litre/min of gas is translated through the leak channel LC to an auxiliary gas sensor, such as a mass-spectroscopy device.

In a more preferred embodiment, the leak channel LC is adapted to provide a negative pressure wherein between 120 and 190 litre/min of gas is translated through the leak channel LC to an auxiliary gas sensor, such as a mass-spectroscopy device.

In a most preferred embodiment, the leak channel LC is adapted to provide a negative pressure wherein between 150 and 170 litre/min of gas is translated through the leak channel LC to an auxiliary gas sensor, such as a mass-spectroscopy device.

Fig. 10 shows a cut side view of the assembled leak detector unit 10. At a proximal end, the sniffer probe 11 can be seen, comprising a first and second jaw JW, JW'. From the side, it can further be seen how the jaws JW, JW' defines semi-circular shape CIR at its proximal end, adapted to correlate to a pipe (not shown) to ensure a proper seal, when the sniffer probe is axially forced towards the pipe, the jaws JW, JW' bending towards each other to envelope said pipe. At the proximal end of the leak detector unit 10, a contact body CB is located. The contact body CB is in data connection with the sniffer probe 11, either directly or through a switch SW, to determine when the sniffer probe 11 is deformed, providing a seal around a pipe. Within the leak detector unit 10, the electric circuitry 20 and the connector CON is located, thus protected from external forces to reduce damage to the sensitive equipment.

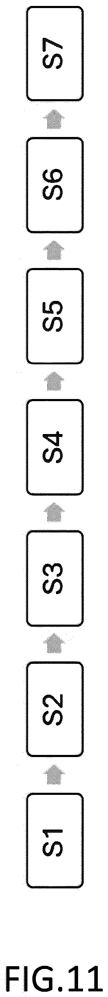

Fig. 11 shows a method of detecting a gas leak, the method comprising the following steps:
- S1 providing a leak detector unit according the first aspect of the invention,
- S2 providing an associated gas sensor, such as a mass-spectroscopy device,
- S3 detecting a gas leak at or near the sniffer probe of the leak detector unit,
- S4 purging gas, at or near the sniffer probe, preferably by expelling nitrogen,
- S5 surrounding a pipe of an associated heating/cooling system by jaws of the sniffer probe, sealing a portion of said pipe,
- S6 measuring/analyzing gas received from the sniffer probe, at the associated gas sensor,
- S7 determing a gas leak from said pipe.

In preferred embodiments, the method further comprises the following step:
- S8 prior to S4, detecting by a contact body, that a seal between the pipe and the sniffer prope has been provided.

In another preferred embodiment, the method further comprises the following step:
- S9 at S8 initiate image obtaining.

In another preferred embodiment, the method further comprises the following step:
- S10 at S8 initiate temporal data, wherein at least one of time stamp for gas leak measurements and image obtaining is provided to a memory.

It is to be understood, that for the steps S8, S9 and S10; one or more of said steps may be initiated at one point in time.

It is further to be understood, that one or more of the above steps may be initiated when the contact body detects a seal between the sniffer probe and the pipe to be inspecteor; or at least the obtainment of images may be performed continuously throughout an inspection of a heating/cooling system.

In yet other embodiments, the data obtained may be downloaded/uploaded to a processor of a cloud system; and wherein a learning algorithm detects early-onset indication of a leak within a system comprising two or more pipes; and wherein the learning algorithm may aid the operator in between selection of sample obtainment between said two or more pipes.

In some embodiments, the sniffer probe 11 comprises a strain gauge, adapted to measure a change in electric resistance within the elastomeric material of the jaws JW, JW', upon the deformation of said jaws JW, JW'.

In other embodiments, the sniffer probe 11 is adapted with a switch SW, said switch SW changing between an on/off position when a target degree of deformation of the first and second jaws JW, JW' have been reached, the sniffer probe adapted to send a signal to the contact body CB.

In yet other embodiments, the two jaws JW, JW' of the sniffer probe 11 as adapted with magnetic or electric contacts respectively, and wherein a closed circuit of the magnetic or electric contacts provide a signal to the contact body CB, said signal determining that a seal has been provided.

It is further to be understood, that the jaws JW, JW' of the sniffer probe 11 are configured for elastic deformation, and wherein said deformation ensures that said deformation is specifically adapted to bring said jaws JW, JW' towards each other; and wherein said deformation occurs when a substantially circular element, such as a pipe, provides an axial pressure towards a proximal portion of said jaws JW, JW', respectively.

In preferred embodiments, the jaws JW, JW' provides a perfect seal around a pipe having a diameter of between 10 and 200 mm such as between 20 and 100 mm.

In another preferred embodiment, the jaws JW, JW' provides an air-tight seal when axially forced towards a circular element, such as forced towards a pipe.

In preferred embodiments, the sniffer probe is adapted with a circular or semi-circular deformation portion CIR, said deformation portion adapted to bring each of the jaws JW, JW' towards each other, when an axial pressure is provided at said deformation portion.

The following is an itemized list of embodiments, according to the invention.

Item 1. A system for a leak detection test, the system comprising:
- a leak detector unit, comprising a sniffer probe, configured for leak testing a test object by sniffing a testing point of the test object;
- a sensor unit configured to monitor a set of parameters of the leak detection test in real time;
- a scanner for scanning the test object;
- a processor unit configured to
   receive object identification data of the test object by scanning the test object thereby identifying the test object,
   receive a first set of leak test data for the identified test object, the first set of leak test data comprising information about a target set of process parameters for the leak detection test of the testing point,
   receive a second set of leak test data by the sensor unit of the leak detector system, the second set of leak test data representing a set of monitoring parameters obtained by the sensor unit in real time during the leak detection test of the testing point, and
   output a signal indicative of a status of the leak detection test based on a difference level between the first set of leak test data and the second set of leak test data.

Item 2. The leak detection system according to Item 1, wherein the system is configured to
determine the difference level between the first set of leak test data and the second set of leak test data; and
output a confirmation indicator when the second set of leak test data corresponds to the first set of leak test data, such as when the difference level is below a threshold value, indicating a confirmed status of the leak detection test of the testing point, or
output a warning indicator when the second set of leak test data deviates from the first set of leak test data, such as when the difference level is above a threshold value, indicating a faulty status of the leak detection test of the testing point.

Item 3. The leak detection system according to any of Items 1-2, wherein the test object comprises a radio frequency tag and said scanner comprises a radio frequency tag reader or the scanner is a camera configured to capture an image of the test object comprising geometrical data wherein the system is configured to identify the test object based on the geometrical data and/or wherein the object identification data of the test object is 2D data or 3D data.

Item 4. The leak detection system according to any of Items 1-3, wherein the sensor unit comprises one or more of the following:
- a gas sensor, such as mass spectrometer, configured to monitor a gas leak rate,
- a gas sensor, such as infrared gas sensor, configured to monitor a gas type,
- a positioning sensor configured to monitor positioning of the sniffer probe and/or the testing point,
- a velocity sensor configured to monitor the velocity of the sniffer probe,
- a timer configured to monitor a sniffing time value of the sniffer probe on the testing point.

Item 5. The leak detection system according to any one of Items 1-4, wherein the first set of leak test data comprises information about a number of testing points of the identified test object and the system is configured to output the signal indicative of the status of the leak detection test for each one of the testing points of the identified test object.

Item 6. The leak detection system according to any one of Items 1-5, wherein the first set of leak test data comprises information about a positioning of the testing point and the second set of leak test data comprises information about a monitored positioning of the sniffer probe and the processor unit is configured to output a confirmation indicator when the difference level between the monitored positioning of the sniffer probe and the positioning of the testing point is within a predefined positioning threshold range, such as between 0 to 250 mm, and/or the system is configured to measure a velocity of the sniffer probe and/or a leak rate and/or a gas type and/or a sniffing time of the sniffer probe in response to receiving the confirmation indicator of the positioning of the sniffer probe.

Item 7. The leak detection system according to any one of Items 1-6, wherein the first set of leak test data comprises information about a target sniffing time value of the sniffer probe on the testing point and the second set of leak test data comprises information about a measured sniffing time value of the sniffer probe on the testing point and the processor unit is configured to output a confirmation indicator when the measured sniffing time value corresponds to the target sniffing time, and/or
the first set of leak test data comprises information about a threshold leak rate and the second set of leak test data comprises information about a measured leak rate by a first gas sensor of the sensor unit and/or the first set of leak test data comprises information about a target gas type for leak detection test and the second set of leak test data represents an identified gas type by a second gas sensor of the sensor unit, and/or
the first set of leak test data comprises information about a target velocity curve of the sniffer probe and the second set of leak test data comprises information about a measured velocity curve of the sniffer probe and the system is configured to output the warning indicator when the measured velocity curve deviates from the target velocity curve.

Item 8. The leak detection system according to any one of Items 1-7,
comprising one or more output devices configured to output the signal to a user of the system, wherein the signal is an audible signal, a visual signal, haptic signal and/or a tactile signal; and/or,
wherein the sniffer probe comprises the one or more output devices, such as a lighting unit or a vibrating unit for providing said signal.

Item 9. The leak detection system according to any one of Items 1-8, wherein the sniffer probe comprises one or more probe head ports and a clamp arranged for shifting between an open position for receiving a testing point, such as a pipe section, and a closed position for enclosing the testing point and forming a chamber around the testing point in the closed position, wherein at least one of said probe head ports opens into the inside of the chamber, and/or the system is configured to measure a velocity of the sniffer probe and/or a leak rate and/or a gas type and/or a sniffing time of the sniffer probe when the chamber is formed.

Item 10. The leak detection system according to any one of Items 1-9, wherein the sniffer probe comprises a contact body configured for providing a physical contact between the testing point and for activating a timer configured to monitor a sniffing time value of the sniffer probe on the testing point and a sniffing action of the sniffer probe in response to said physical contact, and/or wherein the leak detector unit comprises a leak detector, a pump, a gas sensor, and a purge gas supply in fluid communication with the sniffer probe.

Item 11. The leak detection system according to any one of Items 1-10, comprising
a motion-generating mechanism configured for moving the sniffer probe along a leak detection test path formed based on the first set of leak test data and/or
a robot controller configured for controlling the leak detection test by controlling the motion-generating mechanism by operating the sniffer probe based on the difference level between the first set of leak test data representing a target distance of the sniffer probe to the testing point and the second set of leak test data representing a monitored distance of the sniffer probe to the testing point such that the difference level is minimized.

Item 12. The leak detection system according to any one of Items 1-11, wherein the test object is from the group of: a heat pump, a cooler, a freezer, a tumble-drier, an air conditioner, or a product comprising a cooling system, and/or the system comprises a memory configured to store the status of the leak detection test for each one of the testing points of the identified test object and the first leak test data and/or the second set of leak test data.

Item 13. A computer-implemented method for controlling a leak detection test of a testing point of a test object by using a system for a leak detection test comprising a sniffer probe configured for sniffing on the testing point, the method comprising:
- receiving object identification data of the test object by scanning the test object thereby identifying the test object;
- receiving and/or generating a first set of leak test data for the identified test object, the first set of leak test data representing a set of target process parameters for the leak detection test of the testing point;
- receiving a second set of leak test data by a sensor unit of the leak detector system, the second set of leak test data representing a set of monitored parameters obtained by the sensor unit in real time during the leak detection test of the testing point;
- outputting a signal indicative of a status of the leak detection test based on a difference level between the first set of leak test data and the second set of leak test data, such that outputting the signal comprises:
   outputting a confirmation indicator when the second set of leak test data corresponds to the first set of leak test data, such as when the difference level is below a threshold value, indicating a confirmed status of the leak detection test of the testing point, or
   outputting a warning indicator when the second set of leak test data deviates from the first set of leak test data, such as when the difference level is above the threshold value, indicating a faulty status of the leak detection test of the testing point.

Item 14. The computer-implemented method according to Item 13, wherein the first set of leak test data comprises information about a number of testing points of the identified test object and the method comprises outputting the signal indicative of the status of the leak detection test for each one of the testing points of the identified test object.

Item 15. The method according to any one of Items 13-14, wherein the first set of leak test data comprises information about a positioning of the testing point and the method comprises measuring positioning of the sniffer probe and outputting the confirmation indicator when the difference level between the positioning of the testing point and the monitored positioning of the sniffer probe is within a position threshold value, such as between 0-250 mm, and/or
the method comprising measuring a velocity of the sniffer probe and/or a leak rate and/or a gas type and/or a sniffing time of the sniffer probe in response to receiving the confirmation indicator of the positioning of the sniffer probe, and/or
the method comprising reducing a speed of the sniffer probe in response to receiving the confirmation indicator of the positioning of the sniffer probe.

Item 16. The method according to any one of Items 13-15, wherein the first set of leak test data comprises information about a target sniffing time value of the sniffer probe on the testing point and the method comprises measuring a sniffing time value of the sniffer probe on the testing point and outputting the confirmation indicator when the measured sniffing time value corresponds to the target sniffing time value, and/or
wherein the first set of leak test data comprises information about a threshold leak rate and the method comprises measuring a leak rate and outputting the warning indicator when the measured leak rate is above the threshold leak rate, and/or
wherein the first set of leak test data comprises information about a target gas type for leak detection and the method comprises identifying a gas type by a gas sensor and outputting the warning indicator when the identified gas type deviates from the target gas type, and/or
wherein the first set of leak test data comprises information about a target velocity curve of the sniffer probe and the method comprises measuring the velocity curve of the sniffer probe and outputting the warning indicator when the measured velocity curve deviates from the target velocity curve.

Item 17. The computer-implemented method according to any one of Items 13-16, comprising generating the first set of leak test data by means of artificial intelligence employing a machine learning algorithm, wherein the machine learning algorithm has been trained on a plurality of test objects.

Item 18. The computer-implemented method according to any one of Items 13-17, comprising determining the difference level between a target process parameter and a monitored process parameter.

Item 19. The computer-implemented method according to any one of Items 13- 18, comprising storing the first set of leak test data of one or more testing points of one or more test objects and/or the second set of leak test data of one or more testing points of one or more test objects and/or the status of the leak detection test of each one of the one more testing points of the identified test object.

Item 20. The computer-implemented method according to any one of Items 13-19, comprising determining the difference level between the first set of leak test data representing a target distance of the sniffer probe to the testing point and the second set of leak test data representing a monitored distance of the sniffer probe to the testing point; and, operating the sniffer probe by moving the sniffer probe based on the difference level between the first set of leak test data and the second set of leak test data such that the difference level is minimized, and/or
comprising operating the sniffer probe by an operator or by a robotic motion controller.

Item 21. The computer-implemented method according to Item 20, comprising transferring data to the robotic motion controller for controlling a movement of the sniffer probe and moving the sniffer probe based on transferred data.

Item 22. The method according to any one of Items 13-21, wherein the system for a leak detection test is a system according to any one of Items 1-12.

Item 23. A computer-readable storage medium comprising instructions which, when executed by a computing device of a system for a leak detection test, causes the system to carry out the method according to any one of Items 13-22.

Item 24. A computer program product comprising instructions which, when the program is executed by a computing device of a system for a leak detection test, causes the system to carry out the method according to any one of Items 13-22.

Item 25. The leak detection system according to Item 10 further comprising a force sensor , the force sensor configured to measure a force applied to the sniffer probe, the force sensor in data connection with the contact body.

Item 26. The leak detection system according to Item 10 further comprising a switch, the switch adapted to detect a compression or deformation of the sniffer probe, the switch in data connection with the contact body.

In short, the present invention relates to systems, computer-implemented methods and related aspects for leak detection testing. The system for a leak detection test comprises a leak detector unit comprising a sniffer probe and is configured for leak testing a test object by sniffing a testing point of the test object. The system further comprises a sensor unit configured to monitor a set of parameters of the leak detection test in real time. The system further comprises a scanner for scanning the test object. The system further comprises a processor unit configured to receive object identification data of the test object by scanning the test object thereby identifying the test object, receive a first set of leak test data for the identified test object, the first set of leak test data comprising information about a target set of process parameters for the leak detection test of the testing point, receive a second set of leak test data by the sensor unit of the leak detector system, the second set of leak test data representing a set of monitoring parameters obtained by the sensor unit in real time during the leak detection test of the testing point, and output a signal indicative of a status of the leak detection test based on a difference level between the first set of leak test data and the second set of leak test data.

It should be noted that any reference signs do not limit the scope of the claims, that some embodiments may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. Such variation will depend on the software and hardware systems chosen and on designer choice. Al**l** such variations are within the scope of the appended claims. Likewise, software implementations could be accomplished with standard programming techniques with rule-based logic and other logic to accomplish the generating steps, activating steps, operating steps, causing steps, steps. The above mentioned and described embodiments are only given as examples and should not be limiting to the appended claims. Other solutions, uses, objectives, and functions within the scope of the below described patent claims should be apparent for the person skilled in the art.

As used herein, the term "when" may be construed to mean "if" or "upon" or "in response to determining" or "in response to detecting" depending on the context. Similarly, the phrase "if it is determined' or "when it is determined" or "in an instance of" may be construed to mean "upon determining or "in response to determining" or "upon detecting and identifying occurrence of an event" or "in response to detecting occurrence of an event" depending on the context.

The term "receiving" is herein to be interpreted broadly and encompasses obtaining, retrieving, collecting, acquiring, and so forth directly and/or indirectly between two entities configured to be in communication with each other or further with other external entities. However, in some embodiments, the term "receiving" is to be construed as determining, deriving, forming, computing, etc. In other words, receiving data may encompass determining or computing based on e.g. scanning data. Thus, as used herein, "receiving" may indicate that a parameter is received at a first entity/unit from a second entity/unit, or that the parameter is determined at the first entity/unit e.g. based on data received from another entity/unit.

## Claims

1. A system for a leak detection test, the system comprising:
- a leak detector unit, comprising a sniffer probe, configured for leak testing a test object by sniffing a testing point of the test object;
- a sensor unit configured to monitor a set of parameters of the leak detection test in real time;
- a scanner for scanning the test object;
- a processor unit configured to
receive object identification data of the test object by scanning the test object thereby identifying the test object,
receive a first set of leak test data for the identified test object, the first set of leak test data comprising information about a target set of process parameters for the leak detection test of the testing point,
receive a second set of leak test data by the sensor unit of the leak detector system, the second set of leak test data representing a set of monitoring parameters obtained by the sensor unit in real time during the leak detection test of the testing point, and
output a signal indicative of a status of the leak detection test based on a difference level between the first set of leak test data and the second set of leak test data.

2. The leak detection system according to claim 1, wherein the sensor unit comprises a timer configured to monitor a sniffing time value of the sniffer probe on the testing point, wherein the sniffer probe comprises a contact body configured for providing a physical contact between the testing point and for activating said timer and a sniffing action of the sniffer probe in response to said physical contact and
wherein the first set of leak test data comprises information about a target sniffing time value of the sniffer probe on the testing point and the second set of leak test data comprises information about a measured sniffing time value of the sniffer probe on the testing point and the processor unit is configured to output a confirmation indicator when the measured sniffing time value corresponds to the target sniffing time.

3. The leak detection system according to claim 1 or 2, wherein the system is configured to
determine the difference level between the first set of leak test data and the second set of leak test data; and
output a confirmation indicator when the second set of leak test data corresponds to the first set of leak test data, such as when the difference level is below a threshold value, indicating a confirmed status of the leak detection test of the testing point, or
output a warning indicator when the second set of leak test data deviates from the first set of leak test data, such as when the difference level is above a threshold value, indicating a faulty status of the leak detection test of the testing point.

4. The leak detection system according to any of claims 1-3, wherein the test object comprises a radio frequency tag and said scanner comprises a radio frequency tag reader or the scanner is a camera configured to capture an image of the test object comprising geometrical data wherein the system is configured to identify the test object based on the geometrical data and/or wherein the object identification data of the test object is 2D data or 3D data.

5. The leak detection system according to any of claims 1-4, wherein the sensor unit further comprises one or more of the following:
- a gas sensor, such as mass spectrometer, configured to monitor a gas leak rate,
- a gas sensor, such as infrared gas sensor, configured to monitor a gas type,
- a positioning sensor configured to monitor positioning of the sniffer probe and/or the testing point,
- a velocity sensor configured to monitor the velocity of the sniffer probe,
- a timer configured to monitor a sniffing time value of the sniffer probe on the testing point.

6. The leak detection system according to any one of claims 1-5, wherein the first set of leak test data comprises information about a number of testing points of the identified test object and the system is configured to output the signal indicative of the status of the leak detection test for each one of the testing points of the identified test object.

7. The leak detection system according to any one of claims 1-6, wherein the first set of leak test data comprises information about a positioning of the testing point and the second set of leak test data comprises information about a monitored positioning of the sniffer probe and the processor unit is configured to output a confirmation indicator when the difference level between the monitored positioning of the sniffer probe and the positioning of the testing point is within a predefined positioning threshold range, such as between 0 to 250 mm, and/or the system is configured to measure a velocity of the sniffer probe and/or a leak rate and/or a gas type and/or a sniffing time of the sniffer probe in response to receiving the confirmation indicator of the positioning of the sniffer probe.

8. The leak detection system according to any one of claims 1-7, wherein
the first set of leak test data comprises information about a threshold leak rate and the second set of leak test data comprises information about a measured leak rate by a first gas sensor of the sensor unit and/or the first set of leak test data comprises information about a target gas type for leak detection test and the second set of leak test data represents an identified gas type by a second gas sensor of the sensor unit, and/or
the first set of leak test data comprises information about a target velocity curve of the sniffer probe and the second set of leak test data comprises information about a measured velocity curve of the sniffer probe and the system is configured to output the warning indicator when the measured velocity curve deviates from the target velocity curve.

9. The leak detection system according to any one of claims 1-8,
comprising one or more output devices configured to output the signal to a user of the system, wherein the signal is an audible signal, a visual signal, haptic signal and/or a tactile signal; and/or,
wherein the sniffer probe comprises the one or more output devices, such as a lighting unit or a vibrating unit for providing said signal.

10. The leak detection system according to any one of claims 1-9, wherein the sniffer probe comprises one or more probe head ports and a clamp arranged for shifting between an open position for receiving a testing point, such as a pipe section, and a closed position for enclosing the testing point and forming a chamber around the testing point in the closed position, wherein at least one of said probe head ports opens into the inside of the chamber, and/or the system is configured to measure a velocity of the sniffer probe and/or a leak rate and/or a gas type and/or a sniffing time of the sniffer probe when the chamber is formed.

11. The leak detection system according to any one of claims 1-10, wherein the leak detector unit comprises a leak detector, a pump, a gas sensor, and a purge gas supply in fluid communication with the sniffer probe.

12. The leak detection system according to any of claims 2-11 further comprising a force sensor, the force sensor configured to measure a force applied to the sniffer probe, the force sensor in data connection with the contact body.

13. The leak detection system according to any of claims 2-11 further comprising a switch, the switch adapted to detect a compression or deformation of the sniffer probe, the switch in data connection with the contact body.

14. The leak detection system according to any one of claims 1-13, comprising
a motion-generating mechanism configured for moving the sniffer probe along a leak detection test path formed based on the first set of leak test data and/or
a robot controller configured for controlling the leak detection test by controlling the motion-generating mechanism by operating the sniffer probe based on the difference level between the first set of leak test data representing a target distance of the sniffer probe to the testing point and the second set of leak test data representing a monitored distance of the sniffer probe to the testing point such that the difference level is minimized.

15. A computer-implemented method for controlling a leak detection test of a testing point of a test object by using the system according to any of claims 1 - 14 for a leak detection test comprising the sniffer probe configured for sniffing on the testing point, the method comprising:
- receiving object identification data of the test object by scanning the test object thereby identifying the test object;
- receiving and/or generating a first set of leak test data for the identified test object, the first set of leak test data representing a set of target process parameters for the leak detection test of the testing point;
- receiving a second set of leak test data by a sensor unit of the leak detector system, the second set of leak test data representing a set of monitored parameters obtained by the sensor unit in real time during the leak detection test of the testing point;
- outputting a signal indicative of a status of the leak detection test based on a difference level between the first set of leak test data and the second set of leak test data, such that outputting the signal comprises:
outputting a confirmation indicator when the second set of leak test data corresponds to the first set of leak test data, such as when the difference level is below a threshold value, indicating a confirmed status of the leak detection test of the testing point, or
outputting a warning indicator when the second set of leak test data deviates from the first set of leak test data, such as when the difference level is above the threshold value, indicating a faulty status of the leak detection test of the testing point,
wherein the first set of leak test data comprises information about a target sniffing time value of the sniffer probe on the testing point and the method comprises measuring a sniffing time value of the sniffer probe on the testing point and outputting the confirmation indicator when the measured sniffing time value corresponds to the target sniffing time value.
